# EUROPEAN PATENT SPECIFICATION

(11) **EP 3 241 472 B1**
(45) Date of publication and mention of the grant of the patent: **25.09.2019**
(21) Application number: 17169768.3
(22) Date of filing: 05.05.2017
(51) Int. Cl.: A47K 10/38, A47K 10/32

(54) **SENSOR AND METHOD FOR DETECTING RESOURCE USAGE IN A DISPENSER, DISPENSER, AND SYSTEM AND METHOD FOR MONITORING RESOURCE USAGE IN A DISPENSER**
SENSOR UND VERFAHREN ZUR ERKENNUNG DER RESSOURCENNUTZUNG IN EINEM SPENDER, SPENDER UND SYSTEM UND VERFAHREN ZUR ÜBERWACHUNG DER RESSOURCENNUTZUNG IN EINEM SPENDER
CAPTEUR ET PROCÉDÉ DE DÉTECTION D'UTILISATION DE RESSOURCES DANS UN DISTRIBUTEUR, DISTRIBUTEUR, SYSTÈME ET PROCÉDÉ DE SURVEILLANCE D'UTILISATION DE RESSOURCES DANS UN DISTRIBUTEUR

(30) Priority: 06.05.2016 DE 102016207854; 09.05.2016 EP 16168688
(43) Date of publication of application: 08.11.2017
(73) Proprietor: CWS-boco International GmbH, 47119 Duisburg (DE)
(72) Inventor: PETRAUTZKI, Dirk, 96106 Ebern (DE); JANEK, Peter Paul, 97618 Wargolshausen (DE); FABER, Carsten Holger, 96450 Coburg (DE); EINSIEDLER, Jens Klaus Siegfried, 13508 Berlin (DE); WANK, Florian Matthias Michael, 96465 Neustad b. Coburg (DE); ZÜGEL, Silke, 60385 Frankfurt am Main (DE); MARTIN, Dirk, 67304 Eisenberg (DE); ZIMMERMANN, Christoph, 69469 Weinheim (DE)
(74) Representative: Eisenführ Speiser

(56) References cited:
- WO-A1-2012/034590
- WO-A2-2010/129741
- US-A1- 2015 366 411

## Description

The invention relates to a sensor for detecting resource usage in a dispenser, in particular in a washroom dispenser, a dispenser, in particular a washroom dispenser, and a method for detecting resource usage in a dispenser, in particular in a washroom dispenser. Further, the invention relates to a system and method for monitoring resource usage in the dispenser.

Dispensers, sensors, and methods for detecting and monitoring resource usage in a dispenser, in particular in a washroom dispenser, are known, for example, from WO 2015/086055 A1, WO 2015/010143 A1, WO 2015/165731 A1, WO 2014/035307 A1, WO 2014/027030 A2, WO 2013/016748 A1, WO 2013/016747 A1, WO 2013/113129 A1, WO 2006/065514 A1, WO 2006/065515 A2 or WO 2005/065509 A1.

WO 2012/034590 A1 discloses a solution for detecting level of a consumable tissue product in a tissue dispenser located in a washroom, in particular a tissue dispenser, a method, system, and a sensor unit utilizing two sensor elements each arranged to measure light reflected from a reflection field located on the tissue product, reflected directly from the tissue product, or measure the absence of the tissue product.

US 2015/0366411 A1 discloses a domestic appliance communication system that provides consumers with the ability to remotely access information about their domestic appliances, and in particular domestic appliances which utilize consumable resources which may need to be periodically replaced or replenished.

WO 2010/129741 A2 discloses a sheet product dispenser including a first roll of sheet product, called a stub roll, a main roll of sheet product, and a dispensing arrangement, wherein a sensor is provided for detecting when sheet product on a stub roll is depleted.

Existing dispensers, sensors, systems and methods, however, usually are expensive and often require the exchange of dispensers to newer ones with the respective features. Further, the detection and monitoring of resource usage is not always accurate and reliable.

Therefore, it is an object of the present invention to provide a sensor for detecting resource usage in a dispenser, a dispenser, a method for detecting resource usage in a dispenser, and a system and method for monitoring resource usage in the dispenser, which reduce or eliminate one or more of the above-mentioned disadvantages. In
particular, it is an object of the present invention to provide a sensor for detecting resource usage in a dispenser, a dispenser, a method for detecting resource usage in a dispenser, and a system and method for monitoring resource usage in the dispenser, which are reliable and/or cost-efficient.

According to the invention,a sensor for detecting resource usage in a dispenser, in particular in a washroom dispenser, comprising the features of claim 1 is provided. The sensor comprises a first and a second pair of an emitter and a receiver of radiation, wherein each of the two pairs is adapted to detect the presence of a resource by receiving via the receiver radiation emitted by the emitter which has been reflected by the resource, and wherein the first pair is adapted and arranged to detect the presence of a resource at a higher resource level than the second pair.

The sensor according to the invention is suitable for detecting resource usage in a dispenser, in particular in a washroom dispenser. In particular, the resource of which the usage can be detected can be a washroom product, such as toilet tissue, toilet paper, paper towel, towel, diapers, wet wipes, or the like. Further, in particular, the dispenser preferably is suitable for dispensing such a washroom product. According to the present invention, it is particularly preferred to detect the usage of a resource, which is suitable to reflect radiation, in particular radiation as further detail below. The detection principle according to the invention is based on reflection of radiation by the resource.

The sensor comprises two pairs of an emitter and a receiver of radiation, which are adapted and arranged to detect the presence of a resource by emitting radiation by the emitter, which radiation is then reflected by the resource, and then received by the receiver.

The first and second pair of an emitter and a receiver of radiation are arranged such that the first pair detects the presence of a resource in a dispenser at a resource level, in particular a first resource level, which is higher than the resource level, in particular a second resource level, at which the second pair of an emitter and a receiver of radiation detects the presence of the resource. In particular, the first pair is adapted and arranged to detect the presence of a resource by receiving via a receiver of the first pair emitted by an emitter of the first pair which has been reflected by the resource at a first resource level, and the second pair is adapted and arranged to detect the presence of a resource by receiving via a receiver of the second pair emitted by an emitter of the second pair which has been reflected by the resource at a second resource level, wherein the first resource level is higher than the second resource level. In this way, two different resource levels can be detected by the sensor.

In case no presence of the resource is detected by one of the pairs, this corresponds preferably to the detection of the absence of the resource. In particular, the absence of the resource preferably leads to the radiation not being reflected any more in a way suitable for the receiver to receive it.

The sensor according to the invention has several advantages. For example, an instance where the first pair of an emitter and a receiver of radiation does not detect the presence of a resource anymore, can be used as an indication that the resource has been used in an amount such that the resource level does not reach the high or first resource level anymore. Under the assumption that the resource has been provided in a certain amount or a certain full resource level in the beginning, an instance where the first pair does not detect the presence of a resource anymore means that the resource has been used in an amount which corresponds to the consumption of resource leading to a drop in resource level from a full resource level to the first, high resource level.

Similarly, an instance where the second pair of an emitter and a receiver of radiation does not detect the presence of a resource at a second, low resource level, indicates that an amount of resource has been consumed corresponding to the drop in the resource level from them first, high resource level to the second, low resource level.

Preferably, the sensor is adapted to keep the time and/or to provide timestamps, such that preferably the time elapsed between an instance where the first pair does not detect the presence of a resource anymore and an instance where the second pair does not detect the presence of a resource anymore can be determined. When the remaining amount of resource at the second, low resource level is known, the remaining time until the resource is fully consumed, can be estimated.

Similarly, the sensor can be used to determine a resource usage by detecting the amount of resource supplied to a reservoir of used resource. This embodiment is particularly preferred for reusable resources, like a towel product, which is washable and can be reused. Such a reusable resource can be provided in the form of a roll, which is used by pulling or unrolling the resource from the roll. Often, with such products, the used resource is collected on a further roll, which is empty in the beginning and on which the used resource is collected by rolling the use resource up. In this case, the sensor can be used to detect the amount of used resource accumulating on the roll.

Preferably, three or more pairs of an emitter and a receiver of radiation are provided, which are arranged and adapted corresponding to the first and second pair. In particular, it is preferred that three or more pairs are adapted and arranged to detect the presence of a resource at different resource levels. With such an embodiment, information about resource usage can be obtained in a very detailed manner. Further, in particular when the sensor is arranged and adapted to keep the time and/or to provide timestamps, detailed estimates about resource usage over time and/or time remaining until a certain resource level is reached, are possible.

Preferably, the main detection direction of a pair of an emitter and a receiver substantially corresponds to the direction in which the radiation is emitted and/or received. For example, when the directions of emission and receipt of radiation are angled towards each other, the main detection direction can be understood as the angle bisector of those two directions. In particular, the main detection directions of the two pairs of an emitter and a receiver of radiation preferably are parallel to each other. Further preferably, the main detection direction one pair or all pairs of an emitter and a receiver is/are substantially horizontal in an operating position of the sensor and/or the dispenser.

According to a preferred embodiment, one single radiation emitting element forms the first emitter of the first pair and the second emitter of the second pair. In this embodiment, the two pairs comprise only one single radiation emitting element, which acts as the emitter of the first pair and the emitter of the second pair. Preferably, the arrangement of the first and second pair is chosen such that it is suitable for the angle of radiation of the single radiation emitting element and/or the angle of reflection of the resource. For example, the single radiation emitting element can be positioned between the receivers of the first and second pair. This embodiment is particularly cost-efficient, since the number of radiation emitting elements can be lower than the number of pairs of emitters and receivers of radiation. Further, it can be preferred that one single radiation emitting element forms the emitter of more than two pairs of emitters and receivers of radiation.

Preferably, a pair of an emitter and a receiver of radiation can comprise two receiving elements of radiation, in particular to phototransistors. This redundant provision of two receiving elements of radiation for the receiver of a pair can enhance reliability and detection accuracy.

In a further preferred embodiment, the two pairs of an emitter and a receiver of radiation are adapted to emit and receive electromagnetic radiation and/or acoustic radiation, in particular visible light and/or ultrasound. Further preferably, the two pairs of an emitter and a receiver of radiation are adapted to emit and receive pulsed radiation. The pulse length can be a predetermined interval, for example a constant or varying interval. Preferably, the interval can have a duration of several minutes or several hours. The interval can be chosen such that a predetermined number of pulses is emitted per minute or per hour. Preferably, the time between pulses is as least one minute, preferably at least 2 minutes, or at least 5 minutes, or at least 10 minutes, in order to reduce energy consumption.

Preferably, the emitters are formed by one or more radiation emitting elements, preferably light emitting diodes (LEDs). Further preferably, the receivers are formed by phototransistors. In particular, it is preferred that the phototransistors are operated in reverse direction. It is further preferred that the measurement is realized with at least one emitter (preferably a light emitting diode) and at least one receiver (preferably a phototransistor), which are operated in reverse direction. This has the advantage that a dark current can be reduced or avoided, and that a very energy-saving measurement can be realized.

It is further preferred that the two pairs of an emitter and a receiver of radiation are arranged on a single support element, in particular on one circuit board, preferably a printed circuit board.

In a further preferred embodiment, a main detection direction of the two pairs of an emitter and a receiver of radiation is a substantially orthogonal to a main direction of resource usage. For example, when stacks of folded products, like tissues or towels, is present in the dispenser, a main direction of resource usage is usually in a substantially vertically downward direction, where the folded product is consumed through a dispensing opening, which is usually directed downwards in an operating position of the dispenser. In such a case, the sensor preferably is arranged such that the detection direction is orthogonal to the direction of usage. For example, when the main direction of usage is substantially vertically downwards, the main detection direction can be arranged substantially horizontally. In this way, the side of the stack of folded products can form the reflection plane for reflecting the radiation.

In a further preferred embodiment, in case the resource is provided as a roll, a main detection direction of the two pairs of an emitter and a receiver of radiation is substantially parallel to an axis of rotation of the roll. For example, resources like toilet paper, towels or paper towels etc. can be provided as a roll, which is rotating about an axis of rotation in order to consume the resource. In such a case, the main detection direction preferably is parallel to the axis of rotation.

In particular, it can be preferred that a distance between the pairs and the resource in the main detection direction or parallel thereto is substantially constant.

These embodiments have the advantage over sensors, which have a varying distance between the detector and the resource and/or which have a main detection direction parallel to the main direction of usage, that the detection is more accurate and/or reliable and/or the sensor can be less expensive, since it only needs to be suitable for a predetermined detection range, which is much smaller than in other sensors.

In particular, it is preferred that the two pairs of an emitter and a receiver of radiation are arranged spaced from each other in a main direction of resource usage. Further, it can be preferred that the two pairs of an emitter and a receiver of radiation are arranged in a linear pattern and/or in a matrix pattern. Preferably, the arrangement and/or position of the pairs is adapted to the form of resource to be detected and the way in which the resource will be consumed. In particular, it is preferred that the arrangement and/or position of the pairs is adapted to allow for a sufficiently accurate and/or reliable detection of different resource levels.

Further, a control unit is provided, adapted to control the activation and/or deactivation of the two pairs of an emitter and a receiver of radiation. In particular, the control unit can be adapted to control the activation and/or deactivation of the two pairs individually. Further, the control unit is adapted such that in a new detection cycle, only the pair of an emitter and a receiver of radiation is activated, which is arranged such that it will detect an absence of the resource first. Further still, the control unit is adapted to activate the pair of an emitter and a receiver of radiation which is arranged such that it will be the next pair to detect the absence of the resource after the previous pair has detected an absence of a resource. And the control unit is adapted to deactivate the pair of an emitter and a receiver of radiation for the rest of the present detection cycle which has detected an absence of a resource.

Individual or all embodiments relating to the control unit can have several advantages. Generally, a control unit which is adapted to control the activation and/or deactivation of the pairs of an emitter and a receiver of radiation, in particular the control unit which is adapted for individual control of the pairs, can lead to significant savings in energy consumption when one or several pairs which are not needed at a certain stage, in particular in a certain stage of the detection cycle, are deactivated.

A detection cycle can be understood as the period between the provision of resource corresponding to a full level and the full usage of the resource, i.e. corresponding to an empty level. When the dispenser is then again provided with a new resource supply, preferably corresponding to a full level, a new detection cycle starts.

Preferably, the control unit controls the pairs such that the first pair is activated in the beginning of a detection cycle. When the first pair has detected the absence of the resource, i.e. does not detect the presence of the resource anymore, the next pair is activated. Further preferably, in case that three or more pairs are provided, the first two pairs can be activated in the beginning of a detection cycle and then the next two pairs can be activated once the first pair and/or second pair and has detected the absence of the resource. This activation of two pairs at a time is particularly advantageous when the emitters of two adjacent pairs are formed by one single radiation emitting element.

In a further preferred embodiment, the two pairs of an emitter and receiver of radiation are covered by a protective layer permeable for radiation. In case three or more pairs are provided, preferably all pairs are covered by a protective layer permeable for radiation. Preferably, the protective layer consists of or contains a thermoplastic polymer, in particular polycarbonate. The advantage of covering the pairs is that wear and dirt can be reduced. Since the protective layer preferably is arranged in the path of the radiation to be emitted and received, a protective layer permeable for radiation is preferred.

In a further preferred embodiment, the control unit is arranged on another support element than the two pairs of an emitter and a receiver of radiation or the control unit is arranged on the same support element with the two pairs of an emitter and a receiver of radiation. For example, it can be preferred that the two pairs are arranged on a single support element together with a control unit. Further, it can be preferred that the two pairs are produced on a single support element together with the control unit, wherein the single support element is then separated into two support elements during manufacture. This can be particularly preferred in case the support element is a printed circuit board, which can be separated at a predetermined breaking point, for example. In particular, it is preferred to have the design of the printed circuit board such that after separation, one circuit board containing the two pairs and a further circuit board containing the control unit is created.

In a further preferred embodiment, the sensor is adapted to detect the exchange of a resource in the dispenser. For example, an empty resource level can be detected when none of the pairs detects the presence of a resource. Further for example, a full resource level can be detected when all pairs or at least the first pair detects the presence of a resource. In particular, an exchange of a resource in the dispenser can be detected if all pairs detect the absence of a resource and, subsequently, all pairs or at least the first pair detects the presence of a resource. In case that all pairs have detected the absence of a resource, a new detection cycle is started. Preferably, in the beginning of a new detection cycle, the pairs are subsequently activated from the first pair onwards until at least one pair detects the presence of a resource. In this way, also the provision of a new resource supply which does not reach the full resource level can be detected.

Further it is preferred that the control unit is adapted to perform a test run, preferably at predetermined time intervals. A preferred time interval for a test run can be at a predetermined number of instances per day or per hour. In such a test run, preferably, all pairs are activated and deactivated successively in order to determine the actual or current resource level. Preferably, in a test run the pairs are subsequently activated from the first pair onwards. Further preferably, the pairs are subsequently deactivated from the first pair onwards in a test run.

Preferably, after the test run, at least that pair is activated, which detects the presence of a resource and corresponds to the highest resource level that has been detected during the test run. In case a higher resource level has been detected in the test run than before the test run, preferably a new detection cycle is started and/or an exchange of the resource is detected.

These embodiments relating to test runs are particularly preferred to ensure that the exchange of a resource is detected even if the exchange happens between two pulses of radiation.

In a further preferred embodiment, the detecting range of the pairs of an emitter and a receiver of radiation is sufficiently short to detect the absence of a resource when no resource is present even in a closed dispenser housing. In particular, the detecting range of the pairs of an emitter and a receiver of radiation is adapted for the, preferably constant, distance between the pairs and the resource, which forms the reflection plane for the radiation.

A further preferred embodiment is characterized in that four or more pairs of an emitter and a receiver of radiation are provided for detecting the usage of at least two resource supplies. Preferably, at least two pairs are arranged on two opposite sides of the sensor. Preferably, the sensor is adapted to be placed between two resource supplies. Further preferably, the provision and/or arrangement of pairs of an emitter and a receiver of radiation are symmetric on opposite sides of the sensor.

Further preferably, the sensor is adapted to be removably installed within a dispenser and/or to be installed within a dispenser as a retrofit. This embodiment has the advantage that existing dispensers can be used with the sensor.

It is particularly preferred that the sensor is adapted to be installed tool-free within a dispenser and/or to be positioned within a dispenser via form-fit and/or a snap-fit connection and/or a plug connection. This embodiment provides for a particularly easy and cost efficient way to mount the sensor in or on a dispenser.

In a further preferred embodiment, the sensor and/or the dispenser comprises a spacer for spacing the two pairs of an emitter and a receiver of radiation in a minimum distance from the resource. This design has the advantage that contact between the resource and the pairs of an emitter and a receiver of radiation can be reliably avoided in order to prevent the pairs of an emitter and a receiver from getting overly worn or covered with dirt. Further, the spacer can enhance detection reliability by ensuring that a preferred distance between the pairs and the resource is kept. Further preferably, the sensor and/or the dispenser comprises a stop for spacing the two pairs of an emitter and a receiver of radiation in a maximum distance from the resource. This also has the advantage that a preferred (maximum) distance between the pairs and the resource can be kept.

In case the sensor is adapted to detect the usage of at least two resource supplies, it can be preferred that two opposite spacers are provided for spacing each of the two pairs in a minimum distance from the respective resource supplies.

It is further preferred that the sensor is adapted to be positioned on a rotation axis of a resource provided as roll. For example, toilet paper dispensers can be arranged such that two rolls of toilet paper are arranged on a rotation axis, for example in the form of a bar or rod. Further, also paper towel or towel dispensers can be arranged such that at least one roll of paper towel or towel is arranged on a rotation axis, for example in the form of a bar or rod. It is preferred, that also the sensor can be positioned on such a rotation axis, in particular a rotation axis which has the form of a bar or rod. Preferably, the housing of the sensor has a form, for example a recess, shaped to fit on to such a rotation axis.

Further preferably, the sensor has a retention element for connecting and/or fixing the sensor to the dispenser, preferably in a releasable manner.

According to a further preferred embodiment, the control unit is adapted to communicate with an external communication unit in a bidirectional way, preferably in a wireless way. Preferably, information about resource usage can be transmitted from the sensor to the external communication unit. Further preferably, information, such as software updates, can be transmitted from the external communication unit to the sensor. It is further preferred that the external communication unit is adapted and arranged to communicate, preferably in a bidirectional way, with a plurality of sensors and/or a plurality of dispensers. For example, the wireless communication can be realized by a Bluetooth connection between the external communication unit and the sensor. Further preferably, the external communication unit is adapted and arranged to communicate, preferably in a wireless way, such as Bluetooth, to a backend unit, in particular in order to exchange client specific and/or process related information. Further preferably, a system to detect resource usage further comprises mobile devices like tablets or smart phones, which can receive and/or send information from and/or to the sensor, for example via a backend unit and/or the external communication unit.

It is further preferred that the sensor is adapted for energy supply via batteries. This provides for an independent and easy provision of energy. Further preferably, the control unit is adapted to detect the charge of batteries used in the sensor and preferably to send information about the charge of batteries to an external communication unit.

The control unit preferably is adapted to record data about resource usage, preferably in multiple detection cycles, and preferably store the data and/or send the dater to an external communication unit.

According to a further aspect of the invention, it is provided a dispenser, in particular a washroom dispenser, comprising a sensor as described herein.

According to a further aspect of the invention, it is provided a system for monitoring resource usage in at least one dispenser, in particular in at least one washroom dispenser, comprising at least one dispenser as described herein and at least one external communication unit.

According to a further aspect of the invention, it is provided a method for detecting resource usage in a dispenser, in particular in a washroom dispenser, according to claim 14, comprising, preferably providing a sensor as described herein, detecting the presence of a resource by receiving via a receiver of a first pair of an emitter and a receiver of radiation emitted by an emitter of the first pair of an emitter and a receiver of radiation which has been reflected by the resource at a first resource level; detecting the presence of a resource by receiving via a receiver of a second pair of an emitter and a receiver of radiation emitted by an emitter of the second pair of an emitter and a receiver of radiation which has been reflected by the resource at a second resource level; wherein the first resource level is higher than the second resource level.

According to a further aspect of the invention, it is provided a method for monitoring resource usage in at least one dispenser, in particular in at least one washroom dispenser, comprising detecting the presence of a resource with a method as described herein and/or via at least one dispenser as described herein and transmitting information about the resource usage to at least one external communication unit.

As to the advantages, preferred embodiments and details of these further aspects and their preferred embodiments, reference is made to the corresponding advantages, preferred embodiments and details described above.

Preferred embodiments of the invention shall now be described with reference to the attached drawings, in which
- Fig. 1A:: shows a three-dimensional front view of an exemplary embodiment of a washroom dispenser with a sensor according to the invention;
- Fig. 1B:: shows a front view of the washroom dispenser according to figure 1A;
- Fig. 1C:: shows a three-dimensional back view of the washroom dispenser according to figure 1A;
- Fig. 1D:: shows a side view of the washroom dispenser according to figure 1A;
- Fig. 1E:: shows a top view of the washroom dispenser according to figure 1A;
- Fig. 1F:: shows a section along A-A as indicated in figure 1E;
- Fig. 2A:: shows a three-dimensional exploded view of the washroom dispenser according to figure 1A;
- Fig. 2B:: shows a three-dimensional front view of the sensor according to figure 2A;
- Fig. 2C:: shows a front view of the sensor according to figure 2A;
- Fig. 2D:: shows a side view of the sensor according to figure 2A;
- Fig. 2E:: shows a section of the sensor according to figure 2A; and
- Fig. 2F:: shows a top view of the sensor according to figure 2A.

In the figures, elements with the same or comparable functions are indicated with the same reference numerals.

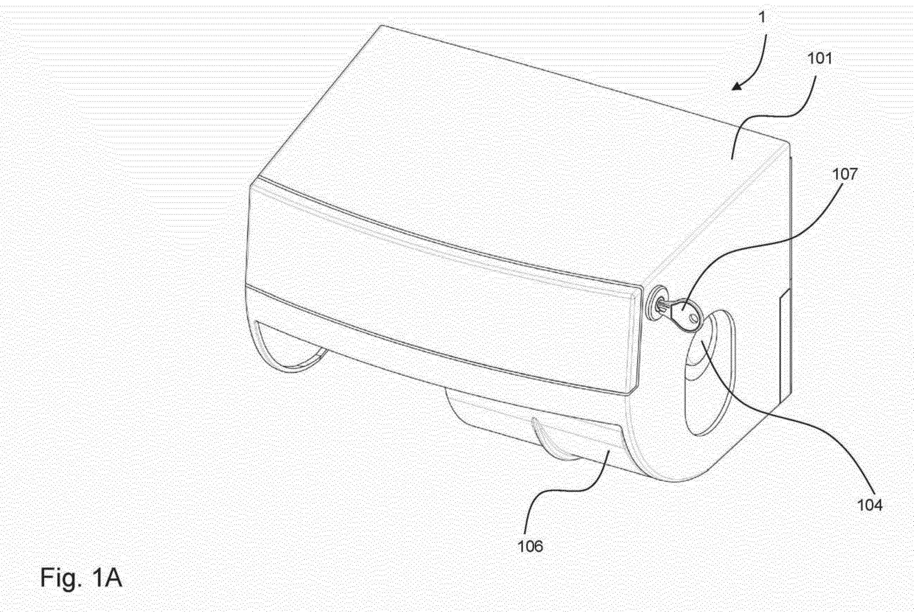

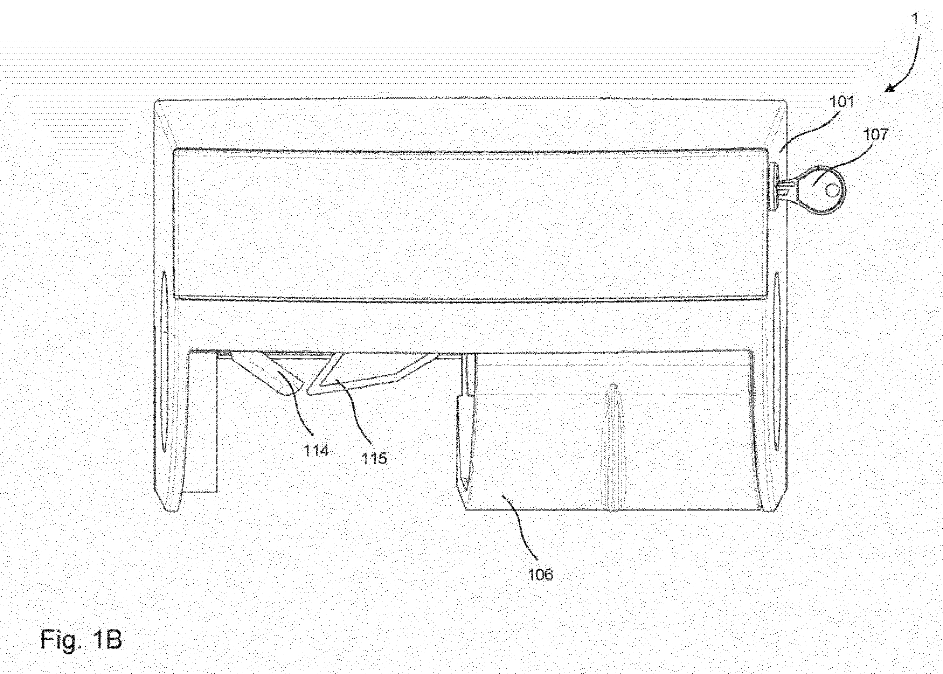

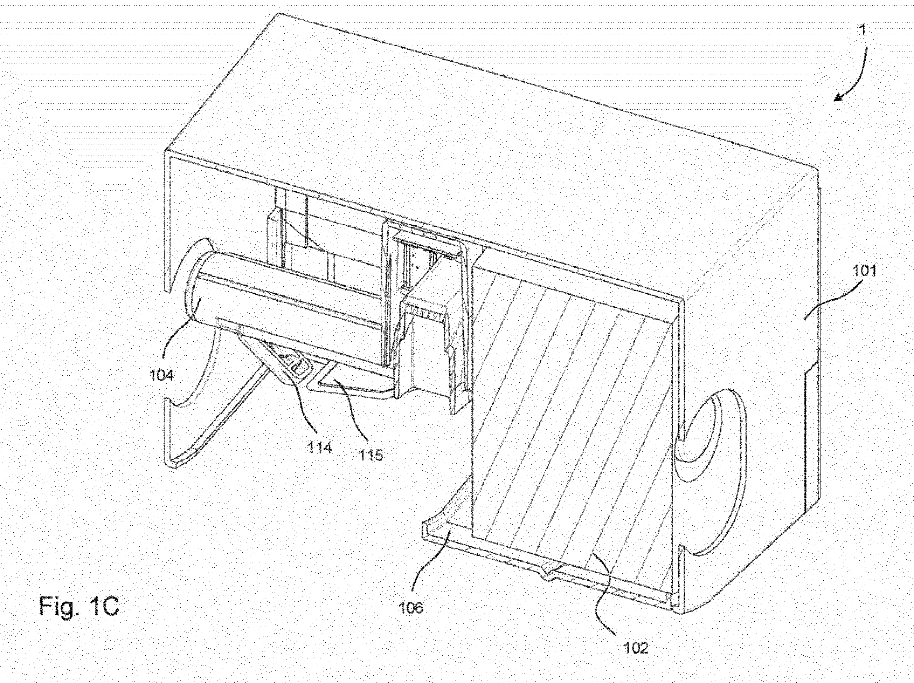

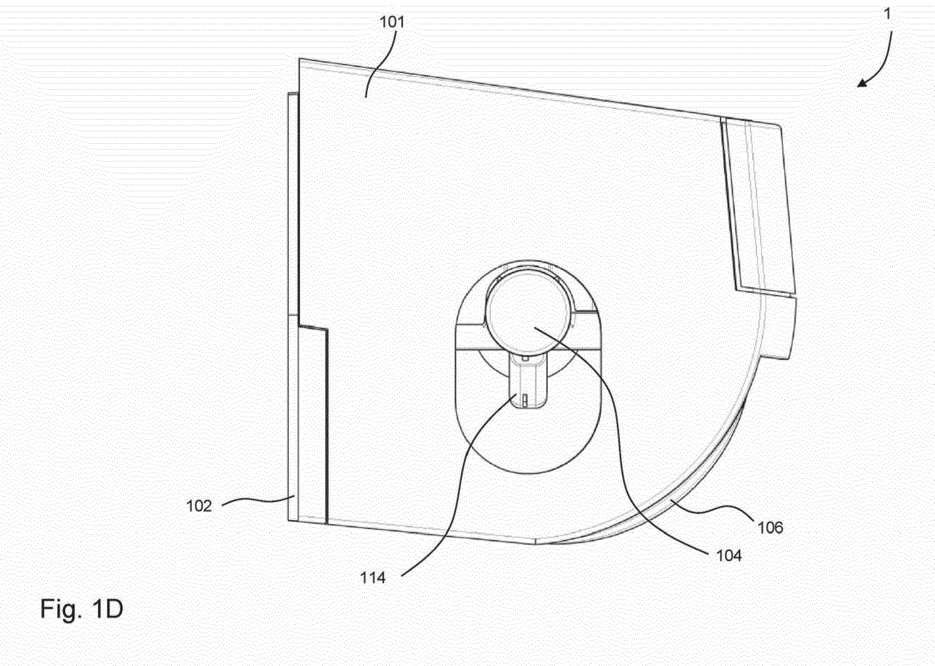

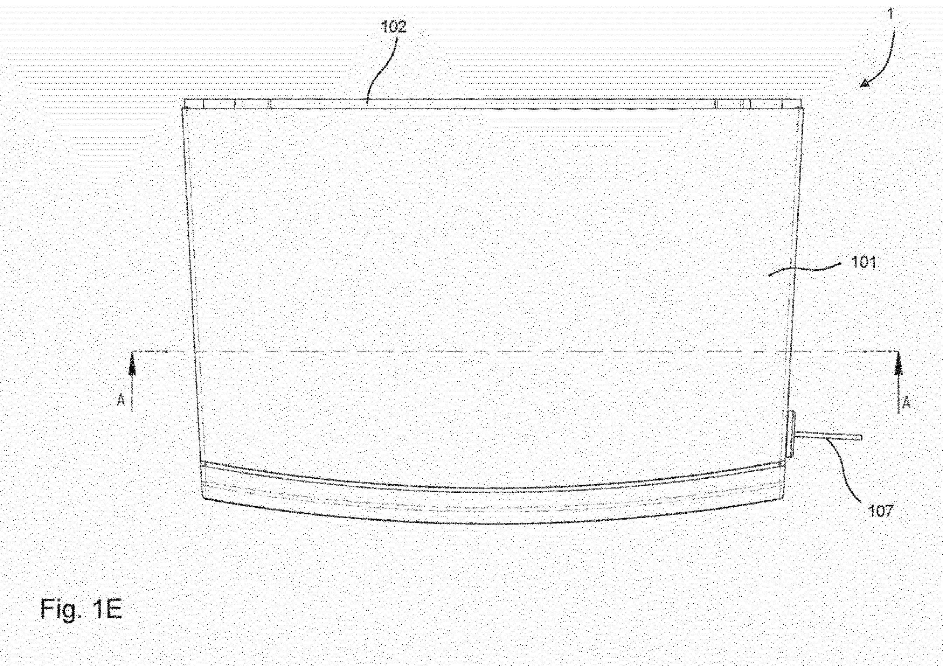

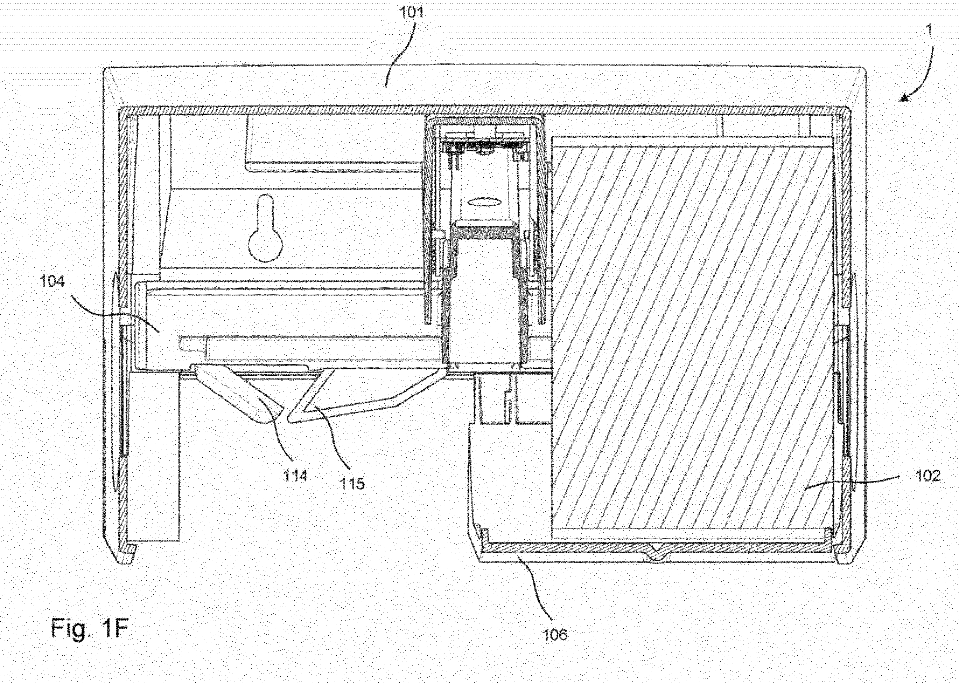

In figures 1 in figures 1A through 2A, a washroom dispenser 1, namely a dispenser for the resource toilet paper provided as a roll, is shown.

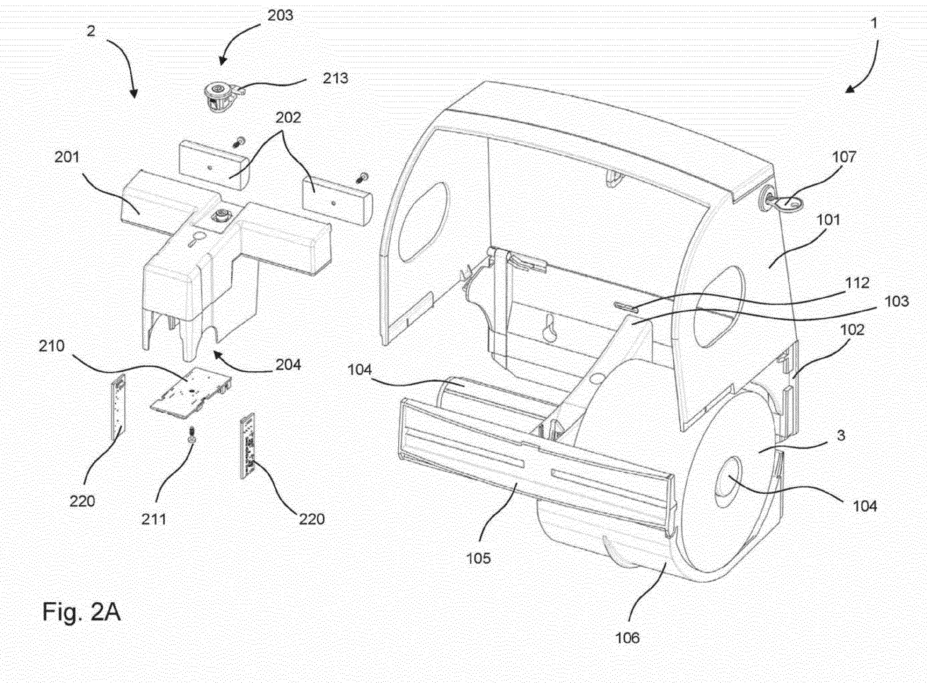

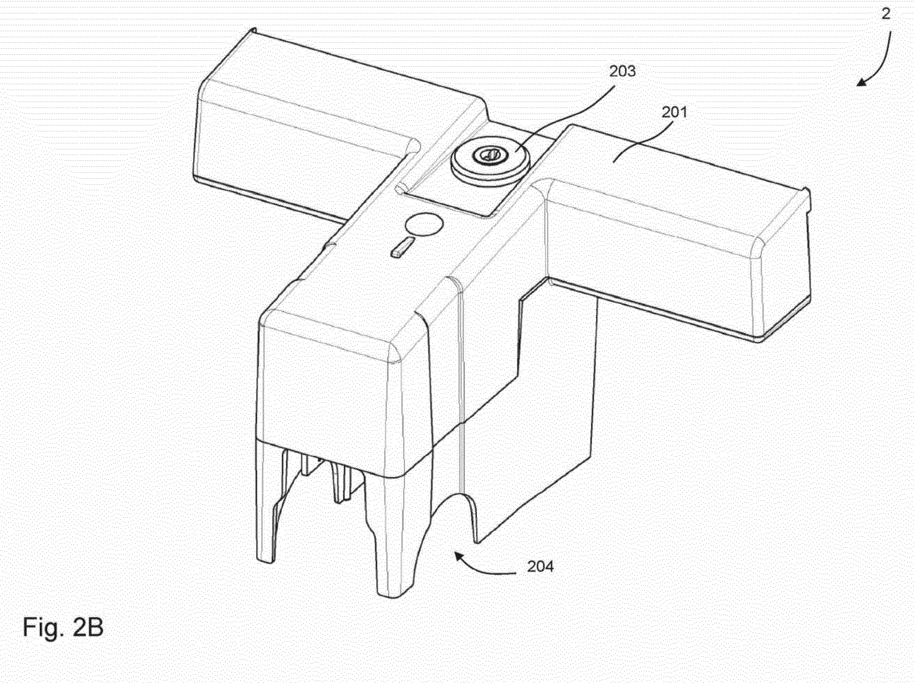

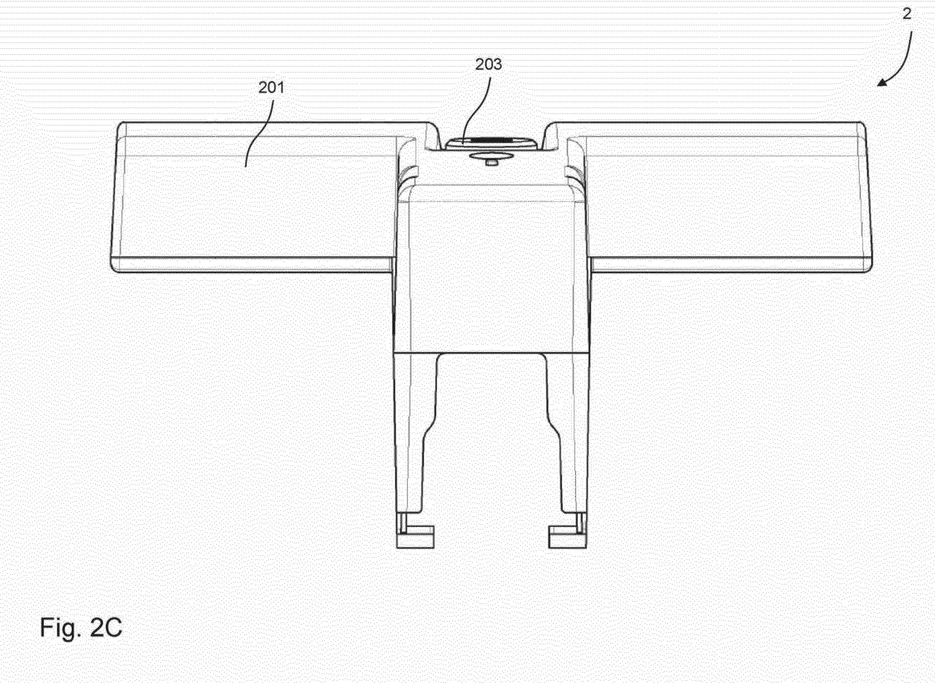

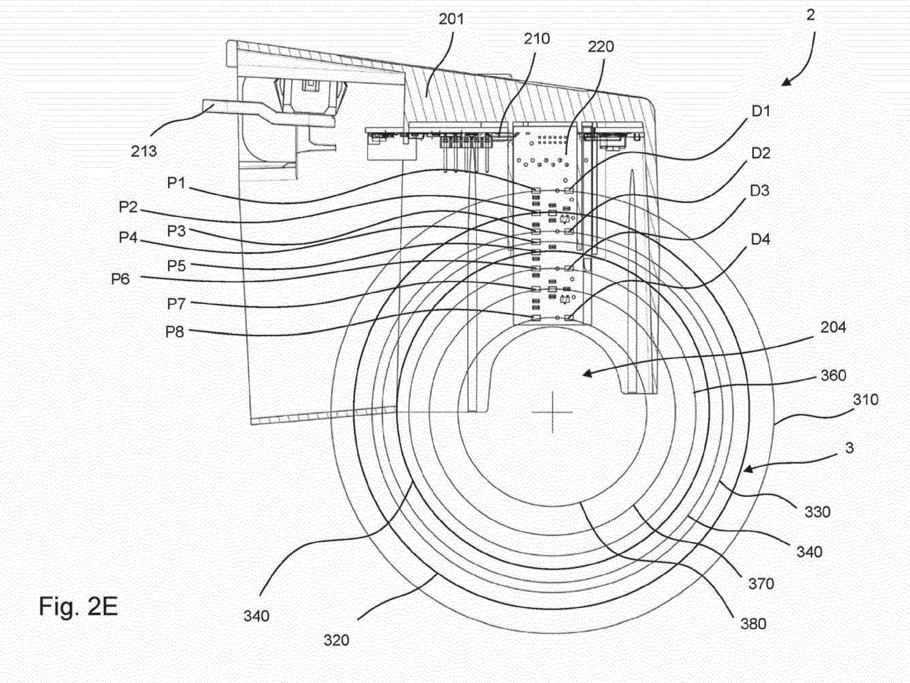

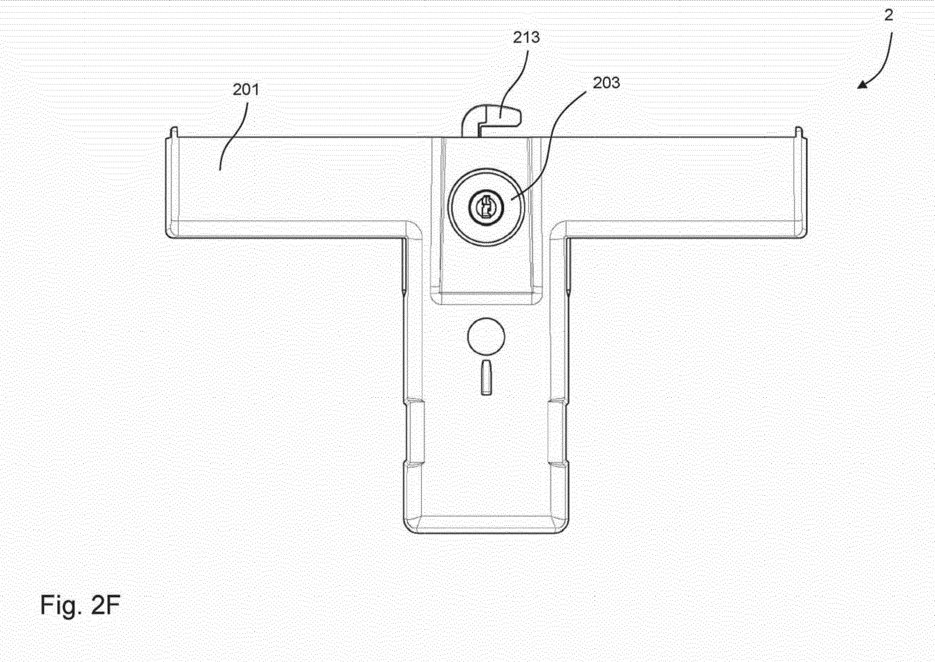

The dispenser 1 comprises a sensor 2 for detecting resource usage in the dispenser 1. The sensor 2 is shown in more detail in figures 2B through 2F. The dispenser 1 comprises a housing with a top cover 101, a back wall 102 and a bottom half cover 106. The top cover 101 can be closed, as shown in figures 1A through 1F, or it can be opened, as shown in figure 2A. In the closed position, the top cover 101 can be locked with key 107.

The half bottom cover 106 can be slid along the back wall 102 and the front element 105 depending on which one of the two toilet paper rolls 3 (only one roll 3 is shown in figure 2A) shall be covered and which one shall be accessed by a user. The dispenser 1 is suitable for receiving two resource supplies in the form of toilet paper rolls 3 on rotation axes 104 in the form of bars or rods. The rotation axes 104 are provided on the bridge 103 connecting the front element 105 to the back wall 102.

On the lower side of the rotation axes 104 two biasing elements 114, 115 are provided, as can be seen in particular in figures 1B, 1C and 1F. When a toilet paper roll 3 is slid over a rotation axis 104, the biasing elements 114, 115 will bias the toilet paper roll 3 downwards, such that the toilet paper roll 3 will be positioned directly on the top side of the rotation axis 104, as can be seen in particular in figure 2A.

On the bridge 103, a sensor 2 is releasably positioned, as can be seen in particular in figures 1C, 1F and 2A. Sensor 2 is suitable for retrofitting existing dispensers 1. The sensor 2 comprises a housing 201, which can be closed by back elements 202. On the lower side of the housing, the shape of the sensors 2 is adapted to rotation axis 104 via recesses 204.

The sensor 2 comprises a retention element 203 with a hook 213. The retention element 203 is positioned such that the hook 213 can fit into an opening 112 of the back wall 102 in order to connect the sensor 2 to the dispenser 1. Preferably, the retention element 203 can be operated from a closed into an open position only with a special tool in order to avoid unauthorized removal of the sensor 2. However, apart from this optional special tool for operating the retention element 203, the sensor 2 is adapted to be installed tool-free within the dispenser 1. Further, the sensor 2 is adapted to be positioned within the dispenser 1 via form fit in the form of recesses 204.

The sensor 2 comprises two support elements in the form of printed circuit boards 220, which are arranged symmetric on opposite sides of the sensor 2. The sensor 2 comprises a further support element in the form of a printed circuit board 210, which comprises the control unit.

Preferably, the three printed circuit boards 220, 210 have been manufactured as one single support element and then have been separated during manufacture. The two printed circuit boards 220 preferably are slid into corresponding racks in the sensor 2. The printed circuit board 210 can be fixed on the inside of sensor 2 with fastening element 211.

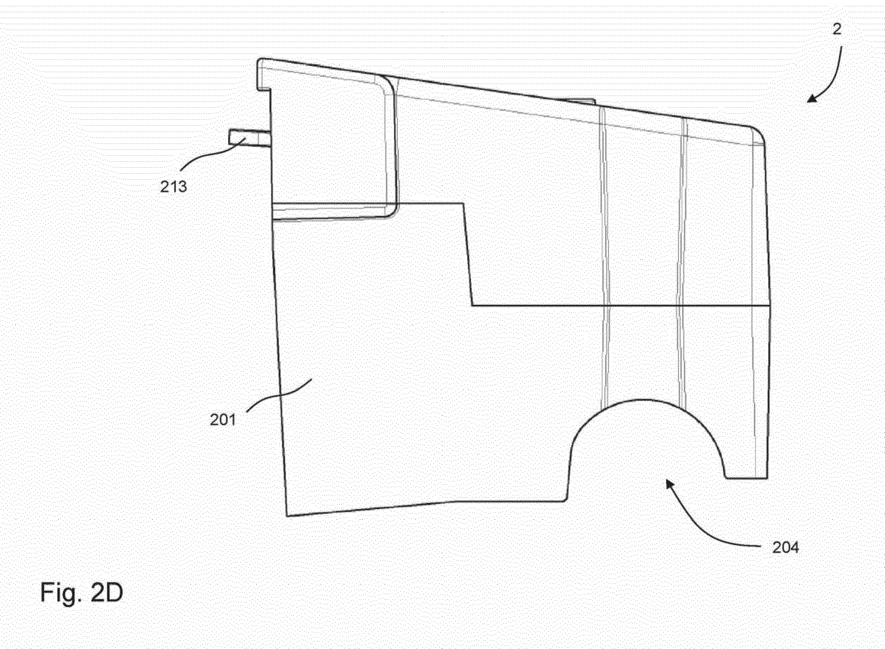

As can be seen in particular in figure 2D, on each of the printed circuit boards 220 eight pairs of an emitter and a receiver of radiation are provided, corresponding to eight different resource levels 310, 320, 330, 340, 350, 360, 370, 380 of the toilet paper roll 3. Of course, less than or more than eight pairs corresponding to an according number of different resource levels are possible.

As can be seen in particular in figure 2D, the eight pairs of an emitter and a receiver of radiation comprise eight receiving elements of radiation P1, P2, P3, P4, P5, P6, P7, P8, in particular eight phototransistors, and four radiation emitting elements D1, D2, D3, D4, in particular four light emitting diodes (LEDs). One single radiation emitting element is provided as an emitter for more than one pair. In the embodiment shown in figure 2D, the first radiation emitting element D1 and the first two receiving elements of radiation P1, P2 form the first two pairs for the two resource levels 310, 320. The second radiation emitting element D2 and the third and fourth receiving elements of radiation P3, P4 form the next two pairs for the two resource levels 330, 340. The third radiation emitting element D3 and the fifth and sixth receiving elements of radiation P5, P6 form the next two pairs for the two resource levels 350, 360. Finally, the fourth radiation emitting element D4 and the seventh and eighth receiving elements of radiation P7, P8 form the next two pairs for the two resource levels 370, 380. The provision of one single radiation emitting element as emitter for more than one pair can save cost and energy consumption.

The main detection direction of the pairs of an emitter and a receiver of radiation is substantially parallel to the axis of rotation 104 of the toilet paper roll 3. In this way, a distance between the pairs and the resource in form of toilet paper roll 3 is substantially constant. In particular, also when the resource is more and more consumed and the resource level sinks, the distance between the pairs and the resource in the main detection direction of parallel thereto remains substantially constant. This has the advantage that pairs of an emitter and a receiver of radiation can be used, which have a narrowly defined detection range. Therefore, also when the housing of the dispenser 1 is closed, and no toilet paper roll 3 is present or its resource level has sunk, the pairs will detect that no resource is present although the housing sidewalls 101 are in detection direction. Preferably, the detection range of the pairs is smaller than the distance to a housing sidewall 101.

With reference to figure 2D, the detection preferably works as follows. When no toilet paper roll 3 or a toilet paper roll 3 with resource level lower than resource level 380 is present on rotation axis 104, none of the eight pairs detects the presence of a resource. Then, after a new toilet paper roll 3 has been placed on rotation axis 104, and in case the new toilet paper roll 3 as a full resource level, all pairs can detect the presence of a resource, as long as they are activated. If a toilet paper roll 3 is provided, which has a medium resource level, then only the pairs positioned up to the actual resource level of the toilet paper roll 3 can detect the presence of a resource.

Preferably, when at least one pair of an emitter and a receiver of radiation detects the presence of a resource after all pairs have detected the absence of a resource, a new detection cycle starts. Preferably, the control unit on circuit board 210 is adapted to individually activate and deactivate the pairs, in particular such that in a new detection cycle, only the first pair is activated, which is arranged such that it will detect an absence of the resource first. The control unit is further preferably adapted to activate the next pair, which is arranged such that it will be the next pair to detect the absence of the resource after the previous pair has detected an absence of a resource, next.

Further preferably, the sensor 2, in particular the control unit, is adapted to keep the time and/or to provide timestamps. In this way, the time elapsed from the detection of an absence of the resource from one pair to the next can be determined and thus the remaining time until the resource will be fully consumed or the time until a further (lower) resource level will be reached, can be estimated.

Preferably, in predetermined time intervals, for example several times a day, depending on frequency of usage of the dispenser, a test run is performed, in which all pairs are successively activated and deactivated in order to detect and/or confirm the current, correct resource level.

The sensor 2 and the dispenser 1 have several advantages. By providing a sensor 2 suitable for retrofit, existing dispensers 1 can be reused. Since the sensor 2 is adapted for bidirectional communication with an external communication unit, information about resource usage can be transmitted from the sensor and information, for example software updates, can be received by the sensor 2. Further, the orientation of the main detection direction leads to a very reliable and accurate detection of resource usage and, at the same time, provides for a substantially constant distance between the pairs and the resource and thus a small necessary detection range. Additionally, the arrangement and positioning of the pairs of an emitter and a receiver of radiation is such that energy consumption is particularly low. This is further enhanced in case the radiation is pulsed.

In the following, further aspects and preferred embodiments are described.

The invention further preferably relates to systems, in particular interconnected systems for fill level detection of consumable goods in the form of sheets, for example in the form of paper, cellulose or cloth, and in particular such consumable goods, which are arranged in stacks or rolls. Examples relate to interconnected systems in washroom hygiene, here toilet paper dispensers with improved fill level sensor technology.

In particular, the reliable fill level detection of consumable goods substantially in the form of sheets, in particular in the form of paper, like paper towels or toilet paper, for example, arranged in a stack or on a roll, or also cellulose or cloth consumable goods, can be an object of the invention.

Existing solutions are described in WO 2015/086055A1, for example. Disadvantages of existing solutions are that reliability is improvable, in particular in an exchange of the product, and that they are expensive.

The following embodiments are preferred:
▪ The measurement is realized via a light sensor technology, wherein the sender and the receiver are arranged on the same sensor board and the measurement of the paper or towel roll diameter is realized via a reflection with the paper or towel roll.
▪ The resolution/measurement accuracy of the sensors' measurement is realized according to requirements by the number of diodes installed on the sensor board (PCB).
▪ Herewith, towel rolls, paper rolls as well as paper stacks can be measured.
▪ Different colors of towels or paper (except for black) can be measured.
▪ The measurement board and the application board can be realized as discrete boards separate from each other, or as combined single-board (flexprint).
▪ The applied modular construction ensures a simple and single-variety recycling of the built in materials at the end of the product life cycle.
▪ The system can measure at least one roll, but can also measure two or more rolls at the same time.
▪ For reasons of longevity and measurement reliability the diodes are protected against a direct contact to the paper or the towel roll, respectively, via a light permeable cover against dirt and/or damage.
▪ The measurement system is exchangeable and can be retrofitted via form fit and tool-free into a standard dispenser envisaged therefore, if needed.
▪ By targeted control of the measurement diodes it is possible to measure in a very energy-saving manner.
▪ This can be ensured in that at first, only the upper two diodes are active and deactivate as soon as they detect a void => not all power consumers (diodes) are permanently active, leading to an energy saving and particularly long-life measuring.
▪ The sensor technology communicates via an energy-saving Bluetooth technology with an associated washroom communication unit in a bidirectional connection.
▪ In addition, the system ensures the recording of usage frequencies (day, time,...) via the measurement of the activations.
▪ The system can measure the current charge status of the used batteries and report the respective status up to the so-called front-end device (tablet, smartphone etc).

Particular advantages are the improvement of the fill level sensor technology, also for retrofitting, suitable for bidirectional communication, cost efficiency.

## Claims

1. A sensor (2) for detecting resource usage in a dispenser (1), in particular in a washroom dispenser, comprising
a first and a second pair of an emitter and a receiver of radiation, wherein each of the two pairs is adapted to detect the presence of a resource by receiving via the receiver radiation emitted by the emitter which has been reflected by the resource, and wherein the first pair is adapted and arranged to detect the presence of a resource at a higher resource level (310, 320, 330, 340, 350, 360, 370, 380) than the second pair;
**characterized in that**
- a control unit is provided, adapted to control the activation and deactivation of the two pairs of an emitter and a receiver of radiation; and
- the sensor (2) is adapted to detect the exchange of a resource in the dispenser (1), wherein in case that all pairs have detected the absence of a resource, a new detection cycle is started; and.
- the control unit is adapted such that in a new detection cycle, only the pair of an emitter and a receiver of radiation is activated, which is arranged such that it will detect an absence of the resource first; and
- the control unit is adapted to activate the pair of an emitter and a receiver of radiation which is arranged such that it will be the next pair to detect the absence of the resource after the previous pair has detected an absence of a resource; and
- the control unit is adapted to deactivate the pair of an emitter and a receiver of radiation for the rest of the present detection cycle which has detected an absence of a resource.

2. A sensor (2) according to at least one of the preceding claims, wherein
- one single radiation emitting element (D1) forms the first emitter of the first pair and the second emitter of the second pair; and/or
- a pair of an emitter and a receiver of radiation can comprise two receiving elements of radiation (P1. P2).

3. A sensor (2) according to at least one of the preceding claims, wherein the control unit is adapted to
in predetermined time intervals, perform a test run, in which all pairs are successively activated and deactivated in order to detect and/or confirm the current resource leve 1(310, 320, 330, 340, 350, 360, 370, 380).

4. A sensor (2) according to the preceding claim, wherein the control unit is adapted to
- in a test run activate the pairs subsequently from the first pair onwards; and/or
- deactivate the pairs subsequently from the first pair onwards in a test run.

5. A sensor (2) according to at least one of the preceding claims, wherein the measurement is realized with at least one emitter, preferably a light emitting diode, and at least one receiver, preferably a phototransistor, which are operated in reverse direction.

6. A sensor (2) according to at least one of the preceding claims, wherein the sensor (2) is adapted to detect the exchange of a resource in the dispenser (1), wherein
- an empty resource level is detected when none of the pairs detects the presence of a resource; and/or
- a full resource level is detected when all pairs or at least the first pair detects the presence of a resource; and/or
- an exchange of a resource in the dispenser (1) is detected if all pairs detect the absence of a resource and, subsequently, all pairs or at least the first pair detects the presence of a resource; and/or
- in the beginning of a new detection cycle, the pairs are subsequently activated from the first pair onwards until at least one pair detects the presence of a resource.

7. A sensor (2) according to at least one of the preceding claims, wherein
- the two pairs of an emitter and a receiver of radiation are adapted to emit and detect electromagnetic radiation and/or acoustic radiation, in particular visible light and/or ultrasound; and/or
- a main detection direction of the two pairs of an emitter and a receiver of radiation is substantially orthogonal to a main direction of resource usage; and/or
- in case the resource is provided as a roll (3), a main detection direction of the two pairs of an emitter and a receiver of radiation is substantially parallel to an axis of rotation (104) of the roll (3).

8. A sensor (2) according to at least one of the preceding claims, wherein
- the two pairs of an emitter and a receiver of radiation are covered by a protective layer permeable for radiation; and/or
- the sensor is adapted to be removably installed within a dispenser (1) and/or to be installed within a dispenser (1) as a retrofit; and/or
- the control unit is adapted to communicate with an external communication unit in a bidirectional way, preferably in a wireless way; and/or
- the sensor (2) is adapted for energy supply via batteries.

9. A sensor (2) according to at least one of the preceding claims, wherein
- the control unit is adapted to detect the charge of batteries used in the sensor (2) and preferably to send information about the charge of batteries to an external communication, unit and/or
- the control unit is adapted to record data about resource usage, preferably in multiple detection cycles, and preferably store the data and/or send the data to an external communication unit.

10. A dispenser (1), in particular a washroom dispenser, comprising a sensor (2) according to at least one of the preceding claims.

11. A system for monitoring resource usage in at least one dispenser, in particular in at least one washroom dispenser, comprising at least one dispenser (1) according to the preceding claim and at least one external communication unit.

12. A method for detecting resource usage in a dispenser (1), in particular in a washroom dispenser, comprising
- detecting the presence of a resource by receiving via a receiver of a first pair of an emitter and a receiver of radiation emitted by an emitter of the first pair of an emitter and a receiver of radiation which has been reflected by the resource at a first resource level (310);
- detecting the presence of a resource by receiving via a receiver of a second pair of an emitter and a receiver of radiation emitted by an emitter of the second pair of an emitter and a receiver of radiation which has been reflected by the resource at a second resource level (320);
- wherein the first resource level (310) is higher than the second resource level (320)
**characterized by**
- controlling the activation and/or deactivation of the two pairs of an emitter and a receiver of radiation; and
- starting a new detection cycle in case that all pairs have detected the absence of a resource; and.
- in a new detection cycle, activating only the pair of an emitter and a receiver of radiation, which is arranged such that it will detect an absence of the resource first; and
- activating the pair of an emitter and a receiver of radiation which is arranged such that it will be the next pair to detect the absence of the resource after the previous pair has detected an absence of a resource;
- deactivating the pair of an emitter and a receiver of radiation for the rest of the present detection cycle which has detected an absence of a resource.

13. A method for monitoring resource usage in at least one dispenser (1), in particular in at least one washroom dispenser, comprising
detecting the presence of a resource with a method according to claim 12 and/or via at least one dispenser (1) according to the preceding claim 10 and transmitting information about the resource usage to at least one external communication unit.

## Patentansprüche

1. Sensor (2) zum Detektieren von Ressourcennutzung in einem Spender (1), insbesondere in einem Waschraumspender, umfassend
ein erstes und ein zweites Paar von einem Sender und einem Empfänger von Strahlung, wobei jedes von den zwei Paaren ausgebildet ist, um das Vorhandensein von einer Ressource zu detektieren, indem über den Empfänger vom Sender emittierte Strahlung empfangen wird, welche von der Ressource reflektiert wurde, und wobei das erste Paar ausgebildet und angeordnet ist, um das Vorhandensein von einer Ressource auf einem höheren Ressourcenpegel zu detektieren (310,320,330,340,350,360,370,380) als das zweite Paar;
**dadurch gekennzeichnet, dass**
- eine Steuereinheit vorgesehen ist, die ausgebildet ist, um die Aktivierung und Deaktivierung der beiden Paare von einem Sender und einem Empfänger von Strahlung zu steuern; und
- der Sensor (2) ausgebildet ist, um den Austausch einer Ressource in dem Spender (1) zu detektieren, wobei für den Fall, dass alle Paare die Abwesenheit von einer Ressource detektiert haben, ein neuer Detektionszyklus gestartet wird; und
- eine Steuereinheit derart ausgebildet ist, dass in einem neuen Detektionszyklus nur das Paar von einem Sender und einem Empfänger von Strahlung aktiviert wird, welches so angeordnet ist, dass es die Abwesenheit einer Ressource zuerst detektieren wird; und
- die Steuereinheit ausgebildet ist, um das Paar von einem Sender und einem Empfänger von Strahlung zu aktivieren, welches so angeordnet ist, dass es das nächste Paar sein wird zum Detektieren der Abwesenheit von der Ressource nachdem das vorhergehende Paar eine Abwesenheit von einer Ressource detektiert hat; und
- die Steuereinheit ausgebildet ist, um das Paar von einem Sender und einem Empfänger von Strahlung für den Rest des gegenwärtigen Detektionszyklus zu deaktivieren, welches eine Abwesenheit von einer Ressource detektiert hat.

2. Sensor (2) nach mindestens einem der vorstehenden Ansprüche, wobei
- ein einziges strahlungsemittierendes Element (D1) den ersten Sender des ersten Paares und den zweiten Sender des zweiten Paares bildet; und/oder
- ein Paar von einem Sender und einem Empfänger von Strahlung zwei empfangende Elemente von Strahlung umfassen kann (P1. P2.).

3. Sensor (2) nach mindestens einem der vorstehenden Ansprüche, wobei die Steuereinheit ausgebildet ist, um
in vorbestimmten Zeitintervallen einen Testlauf durchzuführen, bei dem alle Paare nacheinander aktiviert und deaktiviert werden, um den aktuellen Ressourcenpegel (310, 320, 330, 340, 350, 360, 370, 380) zu detektieren und/oder zu bestätigen.

4. Sensor (2) nach dem vorstehenden Anspruch, wobei die Steuereinheit ausgebildet ist,
- in einem Testlauf die Paare anschließend von dem ersten Paar an zu aktivieren; und/oder
- die Paare anschließend von dem ersten Paar an in einem Testlauf zu deaktivieren.

5. Sensor (2) nach mindestens einem der vorstehenden Ansprüche, wobei die Messung mit mindestens einem Sender, vorzugsweise einer Leuchtdiode, mindestens einem Empfänger, vorzugsweise einem Fototransistor, durchgeführt wird, die in umgekehrter Richtung betrieben werden.

6. Sensor (2) nach mindestens einem der vorstehenden Ansprüche, wobei der Sensor (2) ausgebildet ist, um den Austausch einer Ressource in dem Spender (1) zu detektieren, wobei
- ein leerer Ressourcenpegel detektiert wird, wenn keines der Paare das Vorhandensein einer Ressource detektiert; und/oder
- ein voller Ressourcenpegel detektiert wird, wenn alle Paare oder mindestens das erste Paar das Vorhandensein einer Ressource detektiert; und/oder
- ein Austausch einer Ressource in dem Spender (1) detektiert wird, wenn alle Paare die Abwesenheit einer Ressource detektieren und, anschließend, alle Paare oder mindestens das erste Paar das Vorhandensein einer Ressource detektiert; und/oder
- zu Beginn eines neuen Detektionszyklus die Paare vom dem ersten Paar an anschließend aktiviert werden, bis mindestens ein Paar das Vorhandensein einer Ressource detektiert.

7. Sensor (2) nach mindestens einem der vorstehenden Ansprüche, wobei
- die beiden Paare von einem Sender und einem Empfänger von Strahlung ausgebildet sind, elektromagnetische Strahlung und/oder akustische Strahlung, insbesondere sichtbares Licht und/oder Ultraschallschall, zu emittieren und zu detektieren; und/oder
- eine Hauptdetektionsrichtung der beiden Paare von einem Sender und einem Empfänger von Strahlung im Wesentlichen orthogonal zu einer Hauptrichtung der Ressourcennutzung ist; und/oder
- wenn die Ressource als Rolle (3) bereitgestellt wird, eine Hauptdetektionsrichtung der beiden Paare von einem Sender und einem Empfänger von Strahlung im Wesentlichen parallel zu einer Drehachse (104) der Rolle (3) ist.

8. Sensor (2) nach mindestens einem der vorstehenden Ansprüche, wobei
- die beiden Paare von einem Sender und einem Empfänger von Strahlung von einer strahlungsdurchlässigen Schutzschicht bedeckt sind; und/oder
- der Sensor ausgebildet ist, um abnehmbar in einem Spender (1) installiert und/oder als Nachrüstung in einem Spender (1) installiert zu werden; und/oder
- die Steuereinheit ausgebildet ist, um mit einer externen Kommunikationseinheit bidirektional, vorzugsweise drahtlos, zu kommunizieren; und/oder
- der Sensor (2) ausgebildet ist für Energieversorgung über Batterien.

9. Sensor (2) nach mindestens einem der vorstehenden Ansprüche, wobei
- die Steuereinheit ausgebildet ist, um die Ladung von im Sensor (2) verwendeten Batterien zu detektieren und vorzugsweise Informationen über die Ladung von Batterien an eine externe Kommunikation zu senden, und/oder
- die Steuereinheit ausgebildet ist, um Daten über Ressourcennutzung, vorzugsweise in mehreren Detektionszyklen, aufzuzeichnen und vorzugsweise die Daten zu speichern und/oder die Daten an eine externe Kommunikationseinheit zu senden.

10. Spender (1), insbesondere Waschraumspender, umfassend einen Sensor (2) gemäß mindestens einem der vorstehenden Ansprüche.

11. System zum Überwachen der Ressourcennutzung in mindestens einem Spender, insbesondere in mindestens einem Waschraumspender, umfassend mindestens einen Spender (1) nach dem vorstehenden Anspruch und mindestens eine externe Kommunikationseinheit.

12. Verfahren zum Detektieren von Ressourcennutzung in einem Spender (1), insbesondere in einem Waschraumspender, umfassend
- Detektieren des Vorhandenseins von einer Ressource durch Empfangen einer von einem Sender eines ersten Paares von einem Sender und einem Empfänger von Strahlung emittierten Strahlung über einen Empfänger des ersten Paares von einem Sender und einem Empfänger von Strahlung, die von der Ressource auf einem ersten Ressourcenpegel (310) reflektiert wurde;
- Detektieren des Vorhandenseins einer Ressource durch Empfangen einer von einem Sender eines zweiten Paares von einem Sender und einem Empfänger von Strahlung emittierten Strahlung über einen Empfänger des zweiten Paares von einem Sender und einem Empfänger von Strahlung, die von der Ressource auf einem zweiten Ressourcenpegel (320) reflektiert wurde;
- wobei der erste Ressourcenpegel (310) höher ist als der zweite Ressourcenpegel (320)
**gekennzeichnet durch**
- Steuern der Aktivierung und/oder Deaktivierung der beiden Paare von einem Sender und einem Empfänger von Strahlung; und
- Starten eines neuen Detektionszyklus, falls alle Paare die Abwesenheit einer Ressource detektiert haben; und
- in einem neuen Detektionszyklus, Aktivieren nur des Paares von einem Sender und einem Empfänger von Strahlung, das so angeordnet ist, dass es eine Abwesenheit der Ressource zuerst detektieren wird; und
- Aktivieren des Paares von einem Sender und einem Empfänger von Strahlung, das so angeordnet sind, dass es das nächste Paar sein wird, um die Abwesenheit von der Ressource zu detektieren, nachdem das vorhergehende Paar eine Abwesenheit von einer Ressource detektiert hat;
- Deaktivieren des Paares von einem Sender und einem Empfänger von Strahlung für den Rest des gegenwärtigen Detektionszyklus, das eine Abwesenheit von einer Ressource detektiert hat.

13. Verfahren zum Überwachen der Ressourcennutzung in mindestens einem Spender (1), insbesondere in mindestens einem Waschraumspender, umfassend Detektieren des Vorhandenseins von einer Ressource mit einem Verfahren nach Anspruch 12 und/oder über mindestens einen Spender (1) nach dem vorstehenden Anspruch 10 und Übertragen von Informationen über die Ressourcennutzung an mindestens eine externe-Kommunikationseinheit.

## Revendications

1. Capteur (2) de détection d'utilisation de ressource dans un distributeur (1), en particulier dans un distributeur de toilettes, comprenant
une première et une seconde paire d'un émetteur et d'un récepteur de rayonnement, dans lequel chacune des deux paires est adaptée pour détecter la présence d'une ressource par réception via le récepteur d'un rayonnement émis par l'émetteur qui a été réfléchi par la ressource, et dans lequel la première paire est adaptée et agencée pour détecter la présence d'une ressource à un niveau de ressource plus élevé (310, 320, 330, 340, 350, 360, 370, 380) que la seconde paire ;
**caractérisé en ce que**
- une unité de commande est prévue, adaptée pour commander l'activation et la désactivation des deux paires d'un émetteur et d'un récepteur de rayonnement ; et
- le capteur (2) est adapté pour détecter le remplacement d'une ressource dans le distributeur (1), dans lequel dans le cas où toutes les paires ont détecté l'absence d'une ressource, un nouveau cycle de détection est lancé ; et
- l'unité de commande est adaptée de telle sorte que dans un nouveau cycle de détection, seule la paire d'un émetteur et d'un récepteur de rayonnement est activée, qui est agencée de telle sorte qu'elle détectera en premier une absence de la ressource ; et
- l'unité de commande est adaptée pour activer la paire d'un émetteur et d'un récepteur de rayonnement qui est agencée de telle sorte qu'elle sera la paire suivante à détecter l'absence de la ressource après que la paire précédente a détecté une absence d'une ressource ; et
- l'unité de commande est adaptée pour désactiver la paire d'un émetteur et d'un récepteur de rayonnement pendant le reste du présent cycle de détection qui a détecté une absence d'une ressource.

2. Capteur (2) selon au moins une des revendications précédentes, dans lequel
- un seul élément émetteur de rayonnement (D1) forme le premier émetteur de la première paire et le second émetteur de la seconde paire ; et/ou
- une paire d'un émetteur et d'un récepteur de rayonnement peut comprendre deux éléments récepteurs de rayonnement (P1. P2).

3. Capteur (2) selon au moins une des revendications précédentes, dans lequel l'unité de commande est adaptée pour
réaliser, à des intervalles de temps prédéterminés, un essai de fonctionnement, dans lequel toutes les paires sont activées et désactivées successivement afin de détecter et/ou de confirmer le niveau de ressource courant (310, 320, 330, 340, 350, 360, 370, 380).

4. Capteur (2) selon la revendication précédente, dans lequel l'unité de commande est adaptée pour
- activer, dans un essai de fonctionnement, les paires de manière successive en partant de la première paire ; et/ou
- désactiver les paires de manière successive en partant de la première paire dans un essai de fonctionnement.

5. Capteur (2) selon au moins une des revendications précédentes, dans lequel la mesure est réalisée avec au moins un émetteur, de préférence une diode électroluminescente, et au moins un récepteur, de préférence un phototransistor, qui sont utilisés dans une direction inverse.

6. Capteur (2) selon au moins une des revendications précédentes, dans lequel
le capteur (2) est adapté pour détecter le remplacement d'une ressource dans le distributeur (1), dans lequel
- un niveau de ressource vide est détecté lorsqu'aucune des paires détecte la présence d'une ressource ; et/ou
- un niveau de ressource plein est détecté lorsque toutes les paires ou au moins la première paire détectent la présence d'une ressource ; et/ou
- un remplacement d'une ressource dans le distributeur (1) est détecté si toutes les paires détectent l'absence d'une ressource et, ensuite, toutes les paires ou au moins la première paire détectent la présence d'une ressource ; et/ou
- au début d'un nouveau cycle de détection, les paires sont activées de manière successive en partant de la première paire jusqu'à ce qu'au moins une paire détecte la présence d'une ressource.

7. Capteur (2) selon au moins une des revendications précédentes, dans lequel
- les deux paires d'un émetteur et d'un récepteur de rayonnement sont adaptées pour émettre et détecter un rayonnement électromagnétique et/ou un rayonnement acoustique, en particulier une lumière visible et/ou un ultrason ; et/ou
- une direction de détection principale des deux paires d'un émetteur et d'un récepteur de rayonnement est sensiblement orthogonale à une direction principale d'utilisation de ressource ; et/ou
- dans le cas où la ressource est prévue sous forme d'un rouleau (3), une direction de détection principale des deux paires d'un émetteur et d'un récepteur de rayonnement est sensiblement parallèle à un axe de rotation (104) du rouleau (3).

8. Capteur (2) selon au moins une des revendications précédentes, dans lequel
- les deux paires d'un émetteur et d'un récepteur de rayonnement sont couvertes par une couche de protection perméable au rayonnement ; et/ou
- le capteur est adapté pour être installé de manière amovible à l'intérieur d'un distributeur (1) et/ou pour être installé à l'intérieur d'un distributeur (1) sous forme d'une amélioration ; et/ou
- l'unité de commande est adaptée pour communiquer avec une unité de communication externe d'une manière bidirectionnelle, de préférence d'une manière non filaire ; et/ou
- le capteur (2) est adapté pour être alimenté en énergie via des piles.

9. Capteur (2) selon au moins une des revendications précédentes, dans lequel
- l'unité de commande est adaptée pour détecter la charge des piles utilisées dans le capteur (2) et de préférence pour envoyer des informations sur la charge des piles à une unité de communication externe, et/ou
- l'unité de commande est adaptée pour enregistrer des données sur l'utilisation de ressource, de préférence dans de multiples cycles de détection, et stocker de préférence les données et/ou envoyer les données à une unité de communication externe.

10. Distributeur (1), en particulier distributeur de toilettes, comprenant un capteur (2) selon au moins une des revendications précédentes.

11. Système de surveillance d'utilisation de ressource dans au moins un distributeur, en particulier dans au moins un distributeur de toilettes, comprenant au moins un distributeur (1) selon la revendication précédente et au moins une unité de communication externe.

12. Procédé de détection d'utilisation de ressource dans un distributeur (1), en particulier dans un distributeur de toilettes, comprenant
- la détection de la présence d'une ressource par réception via un récepteur d'une première paire d'un émetteur et d'un récepteur d'un rayonnement, émis par un émetteur de la première paire d'un émetteur et d'un récepteur de rayonnement, qui a été réfléchi par la ressource à un premier niveau de ressource (310) ;
- la détection de la présence d'une ressource par réception via un récepteur d'une seconde paire d'un émetteur et d'un récepteur d'un rayonnement, émis par un émetteur de la seconde paire d'un émetteur et d'un récepteur de rayonnement, qui a été réfléchi par la ressource à un second niveau de ressource (320) ;
- dans lequel le premier niveau de ressource (310) est plus élevé que le second niveau de ressource (320) **caractérisé par**
- la commande de l'activation et/ou de la désactivation des deux paires d'un émetteur et d'un récepteur de rayonnement ; et
- le lancement d'un nouveau cycle de détection dans le cas où toutes les paires ont détecté l'absence d'une ressource ; et
- dans un nouveau cycle de détection, l'activation uniquement de la paire d'un émetteur et d'un récepteur de rayonnement, qui est agencée de telle sorte qu'elle détectera en premier une absence de la ressource ; et
- l'activation de la paire d'un émetteur et d'un récepteur de rayonnement qui est agencée de telle sorte qu'elle sera la paire suivante à détecter l'absence de la ressource après que la paire précédente a détecté une absence d'une ressource ;
- la désactivation de la paire d'un émetteur et d'un récepteur de rayonnement pendant le reste du présent cycle de détection qui a détecté une absence d'une ressource.

13. Procédé de surveillance d'utilisation de ressource dans au moins un distributeur (1), en particulier dans au moins un distributeur de toilettes, comprenant :
la détection de la présence d'une ressource avec un procédé selon la revendication 12 et/ou via au moins un distributeur (1) selon la revendication 10 précédente et la transmission des informations sur l'utilisation de ressource à au moins une unité de communication externe.
